Europäisches Patentamt

European Patent Office

Office européen des brevets

(11) Numéro de publication: **0 239 478 B1**

# (12) FASCICULE DE BREVET EUROPEEN

(45) Date de publication de fascicule du brevet: **26.08.92** (51) Int. Cl.⁵: **C01F 17/00**

(21) Numéro de dépôt: **87400601.8**

(22) Date de dépôt: **18.03.87**

(54) **Oxydes cériques à nouvelles caractéristiques morphologiques et leur procédé d'obtention.**

(30) Priorité: **26.03.86 FR 8604347**

(43) Date de publication de la demande:
**30.09.87 Bulletin 87/40**

(45) Mention de la délivrance du brevet:
**26.08.92 Bulletin 92/35**

(84) Etats contractants désignés:
**AT BE CH DE ES FR GB GR IT LI LU NL SE**

(56) Documents cités:
**EP-A- 0 078 098       EP-A- 0 153 228**
**EP-A- 0 206 906       EP-A- 0 207 857**
**EP-A- 0 208 580       FR-A- 2 416 867**

**CHEMICAL ABSTRACTS, vol. 95, no. 22, février 1981, page 134, résumé no. 189463d, Columbus, Ohio, US; & SU-A-833 525 (INSTITUTE OF GENERAL AND INORGANIC CHEMISTRY, ACADEMY OF SCIENCES, BELORUSSIAN S.S.R.) 30-05-1981**

(73) Titulaire: **RHONE-POULENC CHIMIE**
**25, quai Paul Doumer**
**F-92408 Courbevoie Cédex(FR)**

(72) Inventeur: **Chane-Ching, Jean-Yves**
**47, rue des Apennins**
**F-75017 Paris(FR)**
Inventeur: **Le Loarer, Jean-Luc**
**24, rue du Général Guillaumat**
**F-17000 La Rochelle(FR)**
Inventeur: **Dupuis, Patrick**
**12, rue Feutrier**
**F-75018 Paris(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

Rank Xerox (UK) Business Services

## Description

La présente invention a pour objet des oxydes cériques à nouvelles caractéristiques morphologiques. Elle concerne également un de leur procédé d'obtention.

Dans l'exposé qui suit de l'invention, on entend par surface spécifique, la surface spécifique B.E.T. déterminée selon la méthode BRUNAUER - EMMETT - TELLER, décrite dans le périodique "The Journal of American Society 1938, 60, 309".

L'oxyde cérique seul ou en mélange avec d'autres oxydes métalliques est utilisé comme catalyseurs pour la synthèse notamment du méthanol [C.R. Séances Acad. Sci. Ser. 2. 292 (12), 883-5 (1981)] ou dans des procédés de traitement des gaz résiduaires (demande de brevet japonaise n° 76/62 616).

Pour avoir une bonne réactivité catalytique, il est souhaitable de disposer d'un oxyde cérique ayant la plus grande surface spécifique possible.

On a proposé selon FR-A 2 559 754 un oxyde cérique présentant une surface spécifique d'au moins 85 ± 5 m²/g obtenue après calcination entre 350 et 450°C et de préférence située entre 100 et 130 m²/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination entre 300 et 600°C. L'oxyde cérique obtenu présente une grande surface spécifique mais une porosité faible puisque les micropores ont un diamètre moyen variant de 1 à 2 nm (10 à 20 Å) et un volume poreux de l'ordre de 0,02 cm³/g.

On connaît également dans l'art antérieur (FR-A 2 559 755) un oxyde cérique présentant une surface spécifique d'au moins 85 ± 5 m²/g après calcination entre 350 et 500°C et de préférence située entre 150 et 180 m²/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique et une répartition poreuse étalée avec des pores allant de 1 à 20 nm (10 à 200 Å), des pores de diamètre moyen aux environs de 3 nm (30 Å) et un volume poreux d'environ 0,15 cm³/g. Par ailleurs, il renferme une quantité d'ions sulfate résiduelle qui fait qu'il ne peut être utilisé que sélectivement dans le domaine de la catalyse.

Par rapport aux produits décrits dans la littérature, la demanderesse propose des oxydes cériques à grande surface spécifique et présentant des caractéristiques nouvelles de porosité.

La présente invention concerne un oxyde cérique ayant une surface spécifique d'au moins 100 m²/g après calcination entre 350 et 450°C caractérisé par le fait qu'il présente un volume poreux d'au moins 0,15 cm³/g et des pores d'un diamètre moyen supérieur à 5 nm (50 Å).

Dans la présente demande, les surfaces spécifiques exprimées sont mesurées sur un produit ayant subi une calcination d'au moins 2 heures à la température donnée.

Le volume poreux et la taille des pores sont déterminés comme la surface spécifique par la méthode BET.

Le volume poreux de l'oxyde cérique selon l'invention peut varier entre 0,15 et 0,3 cm³/g.

Enfin, une autre caractéristique de l'oxyde cérique selon l'invention est qu'il peut présenter une grande pureté pouvant être supérieure à 99 % moyennant le choix de la base adéquate à savoir l'ammoniaque, lors de sa préparation.

Un des objets de la présente invention est un oxyde cérique ayant une surface spécifique d'au moins 100 m²/g après calcination entre 350 et 450°C caractérisé par le fait qu'il présente un volume poreux supérieur à 0,15 cm³/g, un diamètre moyen de ses pores compris entre 5 et 20 nm (50 et 200 Å) et une répartition de ses pores monomodale.

D'une manière préférentielle, l'oxyde cérique selon l'invention présente une surface spécifique variant de 150 à 100 m²/g après calcination à une température comprise entre 400 et 450°C.

Une caractéristique essentielle de l'oxyde cérique selon l'invention est qu'il présente une porosité homogène.

Généralement, la taille des pores exprimée par le diamètre moyen ($d_{50}$) varie de 5 à 20 nm (50 à 200 Å), de préférence de 8 à 15 nm (80 à 150 Å). On définit le diamètre moyen comme étant un diamètre tel que tous les pores inférieurs à ce diamètre constituent 50 % du volume poreux ($v_p$) total.

Les écarts-types $e_1$ et $e_2$ qui sont définis par les rapports

$$\frac{d_{84} \cdot v_p}{d_{50} \cdot v_p} \text{ et } \frac{d_{50} \cdot v_p}{d_{16} \cdot v_p}$$

sont compris dans un intervalle allant de 1,0 à 2,0.

L'analyse par diffraction X montre que l'oxyde cérique de l'invention présente une phase cristalline de type $CeO_2$ ayant un paramètre de maille variant de 0,541 à 0,544 nm (5,41 à 5,44 Å) et un taux de cristallisation compris entre 50 et 80 %. Dans la partie cristallisée, la taille des cristallites d'un oxyde cérique obtenu après calcination à 300°C, varie entre 5 et 10 nm (50 et 100 Å).

Un autre objet de la présente invention est un oxyde cérique ayant une surface spécifique d'au moins 100 m²/g après calcination entre 350 et 450°C caractérisé par le fait qu'il présente un volume poreux supérieur à 0,15 cm³/g, une répartition de pores bipopulée : le diamètre moyen des micropores étant compris entre 1 et 5 nm (10 et 50 Å) et le diamètre moyen des mésopores variant entre 5 et 20 nm (50 et 200 Å).

D'une manière préférentielle, l'oxyde cérique selon l'invention présente une surface spécifique variant de 180 à 150 m²/g après calcination à une température comprise entre 400 et 450°C.

La demanderesse a trouvé un procédé de préparation d'un oxyde cérique à grande surface spécifique qui permet de contrôler le volume poreux et la répartition en tailles des pores de l'oxyde cérique obtenu.

Le procédé de préparation de l'oxyde cérique à grande surface spécifique et à porosité controlée est caractérisé par le fait qu'il consiste à déstabiliser par addition d'une base, une dispersion aqueuse colloïdale d'un composé de cérium IV, à séparer le précipité obtenu, puis à le soumettre à un traitement thermique.

La déstabilisation de la dispersion aqueuse colloïdale d'un composé de cérium IV est effectuée par addition d'une base dans la dispersion colloïdale aqueuse du composé de cérium IV jusqu'à obtention d'un pH supérieur à 7.

La demanderesse a découvert de manière inattendue que les caractéristiques morphologiques de l'oxyde cérique obtenu dépendaient des caractéristiques de la dispersion colloïdale aqueuse du composé de cérium IV et que la porosité de l'oxyde cérique obtenu pouvait être contrôlée en jouant notamment sur la morphologie (taille, forme géométrique) des colloïdes de départ et des conditions de déstabilisation de ladite dispersion colloïdale.

Pour la clarté de l'exposé, on définit d'abord le procédé d'obtention de l'oxyde cérique à grande surface spécifique par déstabilisation d'un sol de cérium et ensuite les moyens permettant d'obtenir un oxyde cérique grande surface spécifique à porosité homogène ou bipopulée et qui sont en relation avec le choix des caractéristiques du sol de cérium de départ et de leur mise en oeuvre.

Conformément à l'invention, le procédé d'obtention d'oxyde cérique à grande surface spécifique consiste dans une première étape à soumettre une dispersion colloïdale aqueuse d'un composé de cérium IV, à un traitement basique.

Les dispersions colloïdales aqueuses d'un composé de cérium IV susceptibles d'être mises en oeuvre répondent à la formule générale (I) :

$$Ce\,(M)_z\,(OH)_x\,(NO_3)_y\,,\,n\,H_2O \qquad (I)$$

dans laquelle :
- M représente un métal alcalin ou un radical ammonium quaternaire
- z est compris entre 0 et 0,2
- y est compris entre 0 et 0,7
- x est tel que x = 4 - y + z
- n est compris entre 0 et environ 20

Dans l'exposé qui suit de l'invention, on dénomme par le nom "sol", la dispersion colloïdale aqueuse du composé de cérium IV répondant à la formule (I).

La concentration du composé de cérium IV dans le sol n'est pas critique. Lorsqu'elle est exprimée en CeO₂, elle se situe entre 0,1 et 2,0 moles/litre et, de préférence, entre 0,5 et 1 mole/litre.

Le taux de cérium IV sous forme colloïdale est supérieur à 95 % mais l'invention n'exclut pas le sol dans lequel il y aurait présence de cérium IV sous forme ionique. On choisit de préférence un taux de cérium compris entre 99 et 100 %.

La taille des colloïdes présents dans le sol peut varier dans une gamme assez large. Généralement, le diamètre hydrodynamique moyen des colloïdes déterminé par diffusion quasi-élastique de la lumière selon la méthode décrite par Michael L. Mc Connell dans Analytical Chemistry 53, n° 8 1007 A (1981), peut varier entre 10 et 200 nm (100 et 2000 Å).

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 5 et 10 N.

La quantité de base additionnée est déterminée de telle sorte que le pH final de la dispersion traitée soit supérieur à 7 et de préférence supérieur ou égal à 9 et inférieur ou égal à 10.

D'une manière pratique, on additionne la base dans la dispersion colloïdale aqueuse de composé de cérium IV ou inversement. L'addition peut être effectuée en une seule fois, graduellement ou en continu. Elle s'effectue sous agitation.

Préférentiellement, on ajoute la base dans la dispersion colloïdale aqueuse du composé de cérium IV.

Le débit d'addition de la base dans ladite dispersion n'est pas critique : lorsqu'il est exprimé en moles d'OH⁻ par mole de cérium IV et par heure, il peut varier entre 0,1 et 5 et de préférence 2 et 4.

On fait le mélange à une température qui est de préférence inférieure à 60°C et on travaille de préférence à la température ambiante le plus souvent comprise entre 10 et 25°C.

A la fin de l'addition de la solution basique, on peut éventuellement maintenir encore le milieu réactionnel sous agitation pendant quelque temps afin de parfaire la précipitation : cette durée n'est pas critique et peut varier entre 1 minute et 24 heures.

La deuxième étape du procédé consiste à séparer le précipité obtenu selon les techniques classiques de séparation solide-liquide : filtration, décantation, centrifugation ou essorage.

Cette séparation est effectuée généralement à température ambiante.

On peut éventuellement soumettre le précipité séparé à une opération de lavage afin d'éliminer les ions OH⁻.

Le lavage peut être opéré à l'eau ou à l'aide d'un solvant organique. On peut faire appel aux hydrocarbures aliphatiques, cycloaliphatiques ou aromatiques, à des cétones aliphatiques ou cycloaliphatiques ou à des alcools aliphatiques ou cycloaliphatiques tels que le méthanol, l'éthanol, le n-propanol, l'isopropanol, le n-butanol, l'isobutanol, le néobutanol.

On effectue de un à plusieurs lavages et le plus souvent de un à trois lavages.

Après ce lavage, la teneur en eau du précipité est comprise entre 20 et 80 % et généralement entre 20 et 50 %.

Le produit obtenu après séparation et lavage, peut ensuite être séché à l'air ou sous pression réduite de l'ordre de 1 à 100 mm de mercure (133,322 Pa et 13 332,2 Pa). La température de séchage peut varier entre la température ambiante et 100°C et la durée de séchage n'est pas critique et peut être comprise entre 2 et 48 heures et de préférence 10 à 24 heures.

Selon la dernière étape du procédé de l'invention, on calcine le produit séché à une température choisie entre 300°C et 800°C mais de préférence, entre 350°C et 450°C. Elle dure environ 30 minutes à 10 heures et de préférence 4 à 8 heures.

La borne inférieure définissant la gamme de température n'est pas critique et peut être abaissée.

Par contre, il n'y a pas intérêt à élever la limite supérieure de la température de calcination car l'on constate une chute de la surface spécifique de l'oxyde cérique obtenu.

Il est à noter que le procédé de l'invention se prête tout-à-fait à sa mise en oeuvre en continu.

Comme mentionné précédemment, la morphologie des colloïdes dans le sol induit une certaine répartition de la taille des pores.

Selon une première variante d'exécution de l'invention, on donne des exemples de sols convenant à l'invention dans le but d'obtenir un oxyde cérique à répartition monomodale de la taille de ses pores.

A titre de matières de départ convenan pour l'obtention d'un tel oxyde cérique, on peut avoir recours plus particulièrement à des sols qui sont obtenus par mise en suspension dans l'eau d'un composé de cérium IV répondant à la formule (IIa) :

$$Ce (OH)_x (NO_3)_y , nH_2O \qquad (IIa)$$

dans laquelle :
- x est tel que x = 4 - y
- y est compris entre 0,35 et 0,7
- n est supérieur ou égal à 0 et inférieur ou égal à environ 20

Le sol présente des tailles de colloïdes pouvant varier dans une gamme assez large allant de 10 à 100 nm (100 et 1000 Å).

Par basification jusqu'à obtention d'un pH de 3,0 on peut obtenir des colloïdes plus gros dont le diamètre hydrodynamique se situe alors entre 30 et 200 nm (300 et 2000 Å).

L'obtention de sols ayant les tailles de colloïdes précitées consiste à mettre en suspension dans l'eau, le composé de cérium IV de formule (IIa) qui est directement dispersable dans l'eau. Ledit composé est dispersé sous agitation en milieu aqueux ou en milieu légèrement acide de telle sorte qu'il conduise à un sol dont le pH est compris entre 1 et 2,5.

Le composé de cérium IV de formule (IIa) est préparé selon un procédé qui consiste dans une première étape, à hydrolyser une solution aqueuse d'un nitrate de cérium IV en milieu acide, dans une deuxième étape, à séparer le précipité obtenu et dans une troisième étape, qui n'est pas obligatoire, à le traiter thermiquement.

Dans la première étape, on réalise l'hydrolyse d'une solution aqueuse d'un nitrate de cérium IV.

A cet effet, on part d'une solution de cérium IV qui peut être une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de sel de cérium est choisie de telle sorte qu'elle ne contienne pas d'impuretés qui puissent se retrouver, dans le produit final. Il peut être avantageux de mettre en jeu une solution d'un sel de cérium présentant un degré de pureté supérieure à 99 %.

La concentration de la solution de sel de cérium n'est pas un facteur critique. Lorsqu'elle est exprimée en cérium IV, elle peut varier entre 0,3 et 3 moles par litre de préférence entre 0,5 et 1,5 mole/litre.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'eau oxygénée

La solution de nitrate cérique obtenue selon le procédé d'oxydation électrolytique d'une solution de nitrate céreux et qui est décrite dans la demande de brevet français n° FR-A 2 570 087 (n° 84 13.6411) constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions $H^+$ introduite pour la réaction d'hydrolyse est telle que le rapport molaire $[H^+]/[Ce^{IV}$ éq.] est supérieur ou égal à 0 et inférieur ou égal à 3.

Le choix du rapport molaire $[H^+]/Ce^{IV}$ éq.] dépend du mode de mise en oeuvre de la solution aqueuse de sel de cérium IV et du milieu d'hydrolyse. Il est précisé ultérieurement.

La proportion entre la solution aqueuse de sel de cérium IV et le milieu d'hydrolyse (essentiellement l'eau) est telle que la concentration finale équivalente en cérium IV est comprise entre 0,1 et 1,0 mole/litre de préférence 0,2 à 0,6 mole/litre.

On définit la concentration finale équivalente en cérium IV par l'équation suivante :

$$[Ce^{IV} \text{ éq.}] = \frac{[Ce^{IV}] \times V'}{V + V'}$$

dans laquelle :
- $[Ce^{IV}]$ est la concentration en moles/litre de la solution de sel de cérium IV
- V représente le volume d'eau éventuellement additionné d'acide
- V' représente le volume de la solution de cérium IV.

L'hydrolyse du sel de cérium IV réalisée dans les conditions telles que décrites précédemment est effectuée d'une manière préférentielle entre 70°C et 120°C et de préférence à la température de reflux du milieu réactionnel qui se situe vers 100°C.

Il est plus aisé de travailler à la température de reflux qui est facile à contrôler et à reproduire.

On peut mettre en oeuvre le procédé de l'invention selon plusieurs variantes. Par exemple, on peut additionner en une seule fois, graduellement ou en continu la solution de sel de cérium IV dans l'eau contenant éventuellement de l'acide portée à la température réactionnelle ou inversement.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

Lorsque les deux solutions de départ sont mises en oeuvre selon les modes d'exécution exposés ci-dessus, le rapport molaire $[H^+/Ce^{IV}$ éq.] est supérieur ou égal à 0 et inférieur ou égal à 3.

Il est choisi, de préférence, compris entre 0 et 2,0 pour des questions de rendement.

Selon un autre mode de réalisation de l'invention, on mélange la solution de sel de cérium IV et le milieu d'hydrolyse puis l'on porte ledit mélange maintenu sous agitation à la température réactionnelle.

Dans ce cas, le rapport molaire $[H^+]/[Ce^{IV}$ éq.] peut être choisi supérieur à 0,75 et inférieur ou égal à 3 quelle que soit la concentration finale équivalente en cérium IV. Lorsque le rapport molaire $[H^+]/[Ce^{IV}$ éq.] est choisi supérieur ou égal à 0 et inférieur ou égal à 0,75, la concentration finale équivalente en cérium IV est choisie supérieure ou égale à 0,4 mole/litre.

Quel que soit le mode d'exécution de l'invention, on observe la formation d'un précipité. Le temps de réaction peut varier entre 2 et 8 heures et de préférence, entre 3 et 6 heures.

La deuxième étape du procédé consiste à séparer selon les techniques classiques, la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation : filtration, décantation, essorage et centrifugation.

Une troisième étape du procédé de l'invention consiste à effectuer un traitement thermique du précipité séparé.

Cette opération est facultative car il a été trouvé que le précipité séparé suite à la première étape d'hydrolyse était directement dispersable dans l'eau et qu'il était possible d'obtenir directement un sol aqueux par mise en suspension dans l'eau du précipité séparé sans qu il soit nécessaire de le sécher. En effet, une étape de séchage n'est pas indispensable et une élimination de toute l'eau libre n'est pas requise.

Dans ce cas, le produit obtenu répond à la formule (IIa) :

$$Ce(OH)_x (NO_3)_y, nH_2O \quad (IIa)$$

dans laquelle :
- x est tel que x = 4 - y
- y est compris entre 0,35 et 0,7
- n est supérieur ou égal à 0 et inférieur ou égal à environ 20

En soumettant le précipité séparé à une étape de séchage en contrôlant les paramètres durée et température, on obtient selon un accroissement de ses paramètres, un composé de cérium IV répondant à la formule (IIa) dans laquelle n est supérieur ou égal à 0 et inférieur ou égal à environ 20, un composé de cérium IV répondant à la formule (IIb) correspondant à un composé de formule (II) dans laquelle n et p sont égaux à 0, un composé de cérium IV répondant à la formule (IIc) correspondant à un composé de formule (II) dans laquelle n est égal à 0 et p est supérieur à 0.

Plus précisément, le composé de cérium IV est représenté par la formule (IIb) qui est la suivante :

$$Ce(OH)_x (NO_3)_y \quad (IIb)$$

dans ladite formule :
- x est tel que x = 4 - y
- y est compris entre 0,35 et 0,7
- la teneur en cérium exprimée en % de $CeO_2$ est comprise entre 77 et 72 %.

Si les conditions de séchage sont plus poussées et que la teneur en $CeO_2$ dépasse 72 % pour y = 0,7, 77 % pour y = 0,35 et une valeur comprise entre 77 et 72 % pour y compris entre 0,35 et 0,7, on peut représenter le composé obtenu par la formule suivante (IIc) qui met en évidence la présence d'oxyde cérique :

$$Ce(OH)_x (NO_3)_y, pCeO_2 \quad (IIc)$$

dans ladite formule :
- x est tel que x = 4 - y
- y est compris entre 0,35 et 1,5
- p est supérieur à 0 et inférieur ou égal à 2,0

Les conditions de séchage peuvent varier dans de larges limites. C'est ainsi que la température peut varier entre 15°C et 100°C, de préférence, entre la température ambiante et 50°C. La durée de séchage est choisie de préférence entre 5 et 48 heures afin d'obtenir un produit sec (n = O). L'opération de séchage peut être faite à l'air ou sous pression réduite, par exemple, entre 1 et 100 mm de mercure (133,322 Pa et 13332,2 Pa).

Quel que soit le degré d'hydratation du composé de cérium IV répondant à la formule (II), on obtient un composé de cérium IV directement dispersable dans l'eau et qui par mise en suspension dans l'eau conduit à un sol ayant des colloïdes présentant un diamètre hydrodynamique variant entre (100 et 1000 Å) 10 et 100 nm.

A titre d'autres exemples de sols conduisant également à un oxyde cérique à répartition de tailles de pores homogènes, on peut faire appel à des sols ayant généralement un diamètre hydrodynamique moyen variant entre 30 et 60 nm (300 et 600 Å) et préparé selon un procédé qui consiste à former une dispersion d'oxyde cérique hydraté avec de l'eau et un acide notamment l'acide nitrique, à chauffer la suspension, la quantité d'acide présente dans la dispersion est telle que le pH est inférieur à 5,4. L'oxyde cérique hydraté de départ est préparé par réaction d'une solution d'un sel céreux, par exemple, le carbonate céreux et d'une solution d'ammoniaque en présence d'un agent oxydant, notamment l'eau oxygénée.

Pour plus de détails sur la préparation du sol, on peut se référer à FR-A-2 416 867.

Dans le cas de la mise en oeuvre des sols précités en vue d'obtenir un oxyde cérique à porosité homogène, la demanderesse a constaté que la taille des pores peut être reliée à celle des colloïdes et qu'elle est d'autant plus grande que la taille des colloïdes est plus grosse.

A titre illustratif et non limitatif, on précisera qu'un sol à gros colloïdes ayant un diamètre hydrodynamique moyen égal à 30 nm (300 Å) conduit à un oxyde cérique dont les pores varient entre 5 et 8 nm (50 Å et 80 Å) et un sol ayant des colloïdes de diamètre hydrodynamique moyen de 57 nm (570 Å) permet d'obtenir un oxyde cérique ayant des pores de (160 Å) 16 nm.

Selon une autre variante d'exécution de l'invention, on donne des exemples de sols permettant d'obtenir un oxyde cérique à grande surface spécifique à porosité bipopulée.

On part d'un sol préparé par mise en suspension dans l'eau d'un composé répondant à la formule (II) mais préparé selon les conditions d'hydrolyse déterminées puis à séparer le précipité obtenu et éventuellement à le traiter thermiquement.

La première étape d'hydrolyse consiste à mélanger la solution de sel de cérium IV et le milieu d'hydrolyse et à porter ensuite ledit mélange à la température réactionnelle, cette dernière étant choisie entre 70°C et 120°C et de préférence à la température de reflux du mélange réactionnel.

Les caractéristiques définies précédemment des solutions de départ, solution de sel de cérium IV et milieu d'hydrolyse restent valables.

La quantité d'ions $H^+$ introduite pour la réaction d'hydrolyse est telle que le rapport molaire $[H^+]/[Ce^{IV}$ éq.$]$ est supérieur ou égal à 0 et inférieur ou égal à 0,75.

La proportion entre la solution aqueuse de sel de cérium IV et le milieu d'hydrolyse (essentiellement l'eau) est telle que la concentration finale équivalente est inférieure à 0,4 mole/litre et de préférence choisie entre 0,2 et 0,4 mole/litre.

D'une manière pratique, on effectue le mélange des deux solutions de départ à température ambiante et l'on porte le mélange à la température réactionnelle.

Le temps de réaction peut varier entre 2 et 8 heures et de préférence entre 3 et 6 heures. On observe la formation d'un précipité.

Les opérations de séparation, de séchage éventuel et de mise en suspension du composé de cérium IV en vue d'obtenir le sol sont réalisées conformément à ce qui est décrit précédemment.

On obtient un sol présentant des colloïdes ayant un diamètre hydrodynamique moyen allant de (100 à 1000 Å) 10 à 100 nm.

Les oxydes cériques obtenus après calcination des sols précités peuvent être utilisés dans de nombreuses applications. On peut citer notamment les applications en tant que charge, liant, washcoat, épaississant, dispersant, renforçateur, pigment, adsorbant et matière première pour la fabrication de céramiques.

L'oxyde cérique selon l'invention présente une grande surface spécifique et une forte porosité si bien qu'il est bien adapté pour être utilisé dans le domaine de la catalyse, comme catalyseur ou comme support catalytique.

Il peut être employé comme catalyseur ou support de catalyseur pour effectuer diverses réactions telles que, par exemple : la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou auters composés organiques, les réactions d'oxydation et/ou de réduction, la réaction de Claus, le traitement des gaz d'échappement des moteurs à combustion interne, la démétallation, la méthanation, la shift conversion.

L'oxyde cérique de l'invention peut être utilisé seul ou en mélange avec d'autres oxydes.

En raison de sa grande réactivité chimique, il peut être utilisé avantageusement pour l'élaboration de supports mixtes de catalyseurs, par exemple, $Al_2O_3$-MgO-$CeO_2$ (cf. demande de brevet japonaise n° 78/40077).

On donne ci-après des exemples qui illustrent l'invention sans toutefois la limiter. Dans les exemples, les pourcentages donnés sont exprimés en poids.

EXEMPLE 1 -

a - Préparation d'un sol d'un composé de cérium IV répondant à la formule (IIc) :

Dans un réacteur muni d'un thermomètre, d'un dispositif d'agitation, d'un système d'introduction de réactifs, d'un réfrigérant ascendant et équipé également d'un dispositif de chauffage, on introduit à température ambiante :
- 2150 $cm^3$ d'une solution d'acide nitrique 1,02 N
- 850 $cm^3$ d'une solution de nitrate cérique préparée par électrolyse conformément à FR 2 570 087 (n° 84 13641) et contenant 1,23 mole/litre de cérium IV, 0,05 mole/litre de cérium III et ayant une acidité libre de 0,49 N.

Dans le milieu d'hydrolyse, la concentration en cérium IV exprimée en $CeO_2$ est égale à 60 g/l et le rapport molaire $[H^+]/[Ce^{IV}$ éq.$]$ est égal à 2,5.

On maintient le milieu réactionnel sous agitation et au reflux pendant 4 heures.

On effectue la filtration sur verre fritté (porosité n° 3).

On sèche le produit obtenu dans une étuve à 40°C pendant 48 heures.

On recueille 59,4 g d'un précipité jaune d'un composé de cérium IV répondant à la formule (IIc) contenant 83 % de $CeO_2$, un rapport molaire $NO_3^-/Ce^{IV}$ d'environ 0,5.

On additionne 25,9 g du composé ainsi préparé dans de l'eau distillée mise en oeuvre en quantité suffisante pour obtenir un volume de 250 $cm^3$. On obtient un sol ayant une concentration en $Ce^{IV}$ exprimée en $CeO_2$ de 86 g/l (0,5 M).

L'examen par diffusion quasi-élastique de la lumière montre la présence de colloïdes de diamètre hydrodynamique moyen de l'ordre de (310 Å) 31 nm.

b - Préparation d'un oxyde cérique grande surface spécifique et à répartition creuse homogène

Dans 250 $cm^3$ du sol précédemment préparé, on additionne sous agitation et à température ambiante, une solution d'ammoniaque 11 N jusqu'à pH = 10, à raison de 45,5 $cm^3$/heure.

On maintient la masse réactionnelle à pH = 10 durant 5 minutes, puis on effectue la séparation solide-liquide par filtration.

On effectue ensuite un lavage du précipité récupéré dans 250 $cm^3$ d'eau distillée durant 15 minutes.

Après filtration, le solide recueilli est séché dans une étuve à 100°C durant 24 heures.

On met le précipité dans une nacelle en alumine et on le calcine ensuite dans un four à moufles durant 6 heures à 450°C.

L'oxyde cérique obtenu présente les propriétés physico-chimiques suivantes :
- sa pureté est très bonne puisque le rapport pondéral $Na_2O/CeO_2$ est inférieur à 100 ppm et le rapport pondéral $NO_3^-/CeO_2$ est inférieur à 0,003 %.

L'analyse porosimétrique BET met en évidence :
- une surface spécifique de l'ordre de 115 $m^2$/g
- un volume poreux d'environ 0,23 $cm^3$/g
- un diamètre moyen des pores de l'ordre de 8 nm (80 Å).
- une répartition homogène en taille des pores : les écarts-types déterminés par les rapports

$$\frac{d_{84}.v_p}{d_{50}.v_p} \text{ et } \frac{d_{50}.v_p}{d_{16}.v_p}$$

sont respectivement égaux à 1,06 et 1,5.

## EXEMPLE 2 -

### a - Préparation d'un sol d'un composé de cérium IV répondant à la formule (IIa)

Dans un réacteur muni d'un thermomètre, d'un dispositif d'agitation, d'un système d'introduction de réactifs, d'un réfrigérant ascendant et équipé également d'un dispositif de chauffage, on introduit à température ambiante 1,89 litre d'eau distillée.

On élève la température de cette solution à 100°C sous agitation et on additionne pendant 3 heures, 1,11 litre d'une solution de nitrate cérique contenant 1,26 mole/litre de cérium IV, 0,05 mole/litre de cérium III et ayant une acidité libre de 0,52 N.

Dans le milieu d'hydrolyse, la concentration en cérium IV exprimée en $CeO_2$ est égale à 80 g/l et le rapport molaire $[H^+]/[Ce^{IV}$ éq.] est égal à 0,4.

On maintient le milieu réactionnel sous agitation et au reflux pendant 3 heures.

On effectue la filtration sur verre fritté (porosité n° 3).

On recueille 351 g d'un composé de cérium IV répondant à la formule (IIa) contenant 57 % de $CeO_2$.

On additionne 37,7 g du composé ainsi préparé dans de l'eau distillée mise en oeuvre en quantité suffisante pour obtenir un volume de 250 $cm^3$. On obtient un sol ayant une concentration en $Ce^{IV}$

exprimée en $CeO_2$ de 86 g/l (0,5 M).

L'examen par diffusion quasi-élastique de la lumière montre la présence de colloïdes de diamètre hydrodynamique moyen de l'ordre de (450 Å) 45 nm.

### b - Préparation d'un oxyde cérique grande surface spécifique et à répartition poreuse homogène

Dans 250 $cm^3$ du sol précédemment préparé, on additionne sous agitation et à température ambiante, une solution d'ammoniaque 11 N jusqu'à pH = 10, à raison de 45,5 $cm^3$/heure.

On maintient la masse réactionnelle à pH = 10 durant 5 minutes, puis on effectue la séparation solide-liquide par filtration.

On effectue ensuite un lavage du précipité récupéré dans 250 $cm^3$ d'eau distillée durant 15 minutes.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu met en évidence :
- une surface spécifique de l'ordre de 125 $m^2$/g
- un volume poreux d'environ 0,22 $cm^3$/g
- un diamètre moyen des pores de l'ordre de (75 Å) 7,5 nm
- une répartition homogène en taille des pores : les écarts-types déterminés par les rapports

$$\frac{d_{84}.v_p}{d_{50}.v_p} \text{ et } \frac{d_{50}.v_p}{d_{16}.v_p}$$

sont respectivement égaux à 1,06 et 1,6.

## EXEMPLE 3 -

### a - Préparation d'un sol d'un composé de cérium IV répondant à la formule (IIc)

Dans le dispositif tel que décrit à l'exemple 2, on introduit à température ambiante, 2,182 litres d'acide nitrique 0,518 N.

On élève la température de cette solution à 100°C, sous agitation et on additionne pendant 3 heures, 817,6 $cm^3$ d'une solution de nitrate cérique contenant 1,28 mole/litre de cérium IV, 0,06 mole/litre de cérium III et ayant une acidité libre de 0,53 N.

Dans le milieu d'hydrolyse, la concentration en cérium IV exprimée en $CeO_2$ est égale à 60 g/l et le rapport molaire $[H^+]/[Ce^{IV}$ éq.] est égal à 1,5.

On maintient le milieu réactionnel sous agitation et au reflux pendant 3 heures.

On effectue la filtration sur verre fritté (porosité n° 3).

On sèche le produit obtenu dans une étuve à 40°C pendant 48 heures.

On recueille 180 g d'un composé de cérium IV répondant à la formule (IIc) contenant 82,6 % de $CeO_2$.

On additionne 26,03 g du composé ainsi préparé dans de l'eau distillée mise en oeuvre en quantité suffisante pour obtenir un volume de 250 $cm^3$. On obtient un sol ayant une concentration en $Ce^{IV}$ exprimée en $CeO_2$ de 86 g/l (0,5 M).

L'examen par diffusion quasi-élastique de la lumière montre la présence de colloïdes de diamètre hydrodynamique moyen de l'ordre de (470 Å) 47 nm.

b - Préparation d'un oxyde cérique grande surface spécifique et à répartition poreuse homogène

Dans 250 $cm^3$ du sol précédemment préparé, on additionne sous agitation et à température ambiante, une solution d'ammoniaque 5,5 N jusqu'à pH = 10, à raison de 91 $cm^3$/heure.

On maintient la masse réactionnelle à pH = 10 durant 5 minutes, puis on effectue la séparation solide-liquide par filtration.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu obtenu met en évidence :
- une surface spécifique de l'ordre de 110 $m^2$/g
- un volume poreux d'environ 0,22 $cm^3$/g
- un diamètre moyen des pores de l'ordre de (140 Å) 14 nm
- une répartition homogène en taille des pores : les écarts-types déterminés par les rapports

$$\frac{d_{84} \cdot v_P}{d_{50} \cdot v_P} \text{ et } \frac{d_{50} \cdot v_P}{d_{16} \cdot v_P}$$

sont respectivement égaux à 1,14 et 1,22.

EXEMPLE 4 -

a - Préparation d'un sol d'un composé de cérium IV répondant à la formule (IIc)

Dans le dispositif tel que décrit à l'exemple 2, on introduit à température ambiante 2,455 litres d'acide nitrique 0,59 N.

On élève la température de cette solution à 100°C, sous agitation et on additionne pendant 3 heures, 545 $cm^3$ d'une solution de nitrate cérique contenant 1,28 mole/litre de cérium IV, 0,06 mole/litre de cérium III et ayant une acidité libre de 0,53 N.

Dans le milieu d'hydrolyse, la concentration en cérium IV exprimée en $CeO_2$ est égale à 40 g/l et le rapport molaire $[H^+]/[Ce^{IV}$ éq.] est égal à 2,5.

On maintient le milieu réactionnel sous agitation et au reflux pendant 3 heures.

On effectue la filtration sur verre fritté (porosité n° 3).

On sèche le produit obtenu dans une étuve à 40°C pendant 48 heures.

On recueille 133,6 g d'un composé de cérium IV répondant à la formule (IIc) contenant 83 % de $CeO_2$.

On additionne 25,9 g du composé ainsi préparé dans de l'eau distillée mise en oeuvre en quantité suffisante pour obtenir un volume de 250 $cm^3$. On obtient un sol ayant une concentration en $Ce^{IV}$ exprimée en $CeO_2$ de 86 g/l (0,5 M).

L'examen par diffusion quasi-élastique de la lumière montre la présence de colloïdes de diamètre hydrodynamique moyen de l'ordre de (570 Å) 57 nm.

b - Préparation d'un oxyde cérique grande surface spécifique et à répartition poreuse homogène

Dans 250 $cm^3$ du sol précédemment préparé, on additionne sous agitation et à température ambiante, une solution d'ammoniaque 11 N jusqu'à pH = 10, à raison de 22,5 $cm^3$/heure.

On maintient la masse réactionnelle à pH = 10 durant 5 minutes, puis on effectue la séparation solide-liquide par filtration.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu met en évidence :
- une surface spécifique de l'ordre de 110 $m^2$/g
- un volume poreux d'environ 0,26 $cm^3$/g
- un diamètre moyen des pores de l'ordre de (160 Å) 16 nm
- une répartition homogène en taille des pores : les écarts-types déterminés par les rapports

$$\frac{d_{84} \cdot v_P}{d_{50} \cdot v_P} \text{ et } \frac{d_{50} \cdot v_P}{d_{16} \cdot v_P}$$

sont respectivement égaux à 1,13 et 1,45.

EXEMPLE 5 -

a - Préparation d'un sol d'un composé de cérium IV répondant à la formule (I)

On introduit dans un réacteur :
- 300 g d'un oxyde cérique hydraté préparé par précipitation à l'ammoniaque d'une solution de nitrate céreux en présence d'eau oxygénée, et contenant 71,6 % de $CeO_2$
- 43 cm$^3$ d'acide nitrique 7,5 N additionnés de 475 cm$^3$ d'eau.

On maintient la masse réactionnelle 20 minutes à 70°C puis on effectue la séparation solide-liquide par centrifugation à 3000 tours/minute pendant 15 minutes.

Après élimination du surnageant, on additionne 1,18 litre d'eau.

Après agitation, on obtient un sol à 172 g/l en $CeO_2$ (1 M).

L'examen par diffusion quasi-élastique de la lumière montre la présence de colloïdes de diamètre hydrodynamique moyen de l'ordre de (450 Å) 45 nm.

b - Préparation d'un oxyde cérique grande surface spécifique et à répartition poreuse homogène

Dans 250 cm$^3$ du sol précédemment préparé, on additionne sous agitation et à température ambiante, une solution d'ammoniaque 10,8 N jusqu'à pH = 10, à raison de 100 cm$^3$/heure.

On maintient la masse réactionnelle à pH = 10 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu met en évidence :
- une surface spécifique de l'ordre de 125 m$^2$/g
- un volume poreux d'environ 0,175 cm$^3$/g
- un diamètre moyen des pores de l'ordre de (50 Å) 5 nm
- une répartition homogène en taille des pores : les écarts-types déterminés par les rapports

$$\frac{d_{84} \cdot v_p}{d_{50} \cdot v_p} \quad et \quad \frac{d_{50} \cdot v_p}{d_{16} \cdot v_p}$$

sont respectivement égaux à 1,2 et 1,4.

EXEMPLE 6 -

a - Préparation d'un sol d'un composé de cérium IV répondant à la formule (IIc)

Dans un réacteur muni d'un thermomètre, d'un dispositif d'agitation, d'un système d'introduction de réactifs, d'un réfrigérant ascendant et équipé également d'un dispositif de chauffage, on introduit à température ambiante :
- 2440 cm$^3$ d'eau distillée
- 558 cm$^3$ d'une solution de nitrate cérique contenant 1,25 mole/litre de cérium IV, 0,05 mole/litre de cérium III et ayant une acidité libre de 0,5 N.

Dans le milieu d'hydrolyse, la concentration en cérium IV exprimée en $CeO_2$ est égale à 40 g/l et le rapport molaire $[H^+]/[Ce^{IV}$ éq.] est égal à 0,4.

On maintient le milieu réactionnel sous agitation et au reflux pendant 4 heures.

On effectue la filtration sur verre fritté (porosité n° 3).

On sèche le produit obtenu dans une étuve à 40°C pendant 48 heures.

On recueille 147 g d'un précipité jaune à 80 % de $CeO_2$.

On additionne 26,9 g du composé ainsi préparé dans de l'eau distillée mise en quantité suffisante pour obtenir un volume de 250 cm$^3$. On obtient un sol ayant une concentration en cérium IV exprimée en $CeO_2$ de 86 g/l (0,5 M).

L'examen par diffusion quasi-élastique de la lumière montre la présence de colloïdes de diamètre hydrodynamique moyen de l'ordre de 90 nm (900 Å).

b - Préparation de l'oxyde cérique grande surface spécifique et porosité bipopulée

Dans 250 cm$^3$ du sol précédemment préparé, on additionne sous agitation et à température ambiante, une solution d'ammoniaque 11 N jusqu'à pH = 10, à raison de 45,5 cm$^3$/heure.

On maintient la masse réactionnelle à pH = 10 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures a 450°C.

L'analyse porosimétrique BET de l'oxyde cérique obtenu met en évidence :
- une surface spécifique de l'ordre de 150 m$^2$/g
- un volume poreux d'environ 0,25 cm$^3$/g
- une double répartition de pores :
  présence de micropores de diamètre moyen d'environ (15 Å) 1,5 nm
  présence de mésopores de diamètre moyen d'environ (100 Å) 10 nm

EXEMPLE 7 -

a - Préparation d'un sol d'un composé de cérium IV répondant à la formule (IIc)

On introduit à température ambiante dans le dispositif tel que décrit dans l'exemple 6 :
- 2182 cm$^3$ d'eau distillée
- 817 cm$^3$ d'une solution de nitrate cérique contenant 1,28 mole/litre de cérium IV, 0,06 mole/litre de cérium III et ayant une acidité libre de 0,5 N.

Dans le milieu d'hydrolyse, la concentration en cérium IV exprimée en CeO$_2$ est égale à 60 g/l et le rapport molaire [H$^+$]/[Ce$^{IV}$ éq.] est égal à 0,4.

On maintient le milieu réactionnel sous agitation et au reflux pendant 4 heures.

On effectue la filtration et le séchage du produit obtenu comme dans l'exemple 6.

On recueille 213 g d'un précipité jaune contenant 80,3 % de CeO$_2$.

On additionne 26,77 g du composé ainsi préparé dans de l'eau distillée mise en oeuvre en quantité suffisante pour obtenir un volume de 250 cm$^3$. On obtient un sol ayant une concentration en cérium IV exprimée en CeO$_2$ de 86 g/l (0,5 M).

L'examen par diffusion quasi-élastique de la lumière montre la présence de colloïdes de diamètre hydrodynamique moyen de l'ordre de (750 Å) 75 nm.

b - Préparation de l'oxyde cérique grande surface spécifique et à porosité bipopulée

Dans 250 cm$^3$ du sol précédemment préparé, on additionne sous agitation et à température ambiante, une solution d'ammoniaque 11 N jusqu'à pH = 10, à raison de 45,5 cm$^3$/heure.

On maintient la masse réactionnelle à pH = 10 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu met en évidence :
- une surface spécifique de l'ordre de 175 m$^2$/g
- un volume poreux d'environ 0,160 cm$^3$/g
- une double répartition de pores :
  . présence de micropores de diamètre moyen d'environ (12 Å) 1,2 nm représentant un volume poreux de 0,05 cm$^3$/g
  . présence de mésopores de diamètre moyen de 12 nm (120 Å) représentant un volume poreux de 0,11 cm$^3$/g.

EXEMPLE 8 -

a - Préparation d'un sol d'un composé de cérium IV répondant à la formule (IIc)

On introduit à température ambiante dans le dispositif tel que décrit dans l'exemple 6 :
- 1984 cm$^3$ d'eau distillée
- 1016 cm$^3$ d'une solution de nitrate cérique contenant 1,25 mole/litre de cérium IV, 0,05 mole/litre de cérium III et ayant une acidité libre de 0,5 N.

Dans le milieu d'hydrolyse, la concentration en cérium IV exprimée en CeO$_2$ est égale à 80 g/l et le rapport molaire [H$^+$]/[Ce$^{IV}$ éq.] est égal à 0,4.

On maintient le milieu réactionnel sous agitation et au reflux pendant 4 heures.

On effectue la filtration et le séchage du produit obtenu comme dans l'exemple 6.

On recueille 228 g d'un précipité jaune contenant 82 % de CeO$_2$.

On additionne 26,18 g du composé ainsi préparé dans de l'eau distillée mise en oeuvre en quantité suffisante pour obtenir un volume de 250 cm$^3$. On obtient un sol ayant une concentration en cérium IV exprimée en CeO$_2$ de 86 g/l (0,5 M).

L'examen du sol obtenu par diffusion quasi-élastique de la lumière montre la présence de colloïdes de diamètre hydrodynamique moyen de l'ordre de (650 Å) 65 nm.

b - Préparation de l'oxyde cérique grande surface spécifique et à répartition poreuse homogène

Dans 250 cm$^3$ du sol précédemment préparé, on additionne sous agitation et à température ambiante, une solution d'ammoniaque 11 N jusqu'à pH = 10, à raison de 45,5 cm$^3$/heure.

On maintient la masse réactionnelle à pH = 10 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures à 450°C.

L'analyse porosimétrique BET de l'oxyde cérique obtenu met en évidence :
- une surface spécifique de l'ordre de 100 m$^2$/g
- un volume poreux d'environ 0,20 cm$^3$/g
- un diamètre moyen des pores de l'ordre de (85 Å) 8,5 nm

- une répartition homogène en taille des pores : les écarts-types déterminés par les rapports

$$\frac{d_{84} \cdot v_P}{d_{50} \cdot v_P} \text{ et } \frac{d_{50} \cdot v_P}{d_{16} \cdot v_P}$$

sont respectivement égaux à 2,94 et 8,5.

EXEMPLE 9 -

a - Préparation d'un sol d'un composé de cérium IV répondant à la formule (IIa)

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à température ambiante :
- 1425 cm$^3$ d'eau distillée
- 558 cm$^3$ d'une solution de nitrate cérique contenant 1,24 mole/litre de cérium IV, 0,06 mole/litre de cérium III et ayant une acidité libre de 0,8 N.

Dans le milieu d'hydrolyse, la concentration en cérium IV exprimée en $CeO_2$ est égale à 60 g/litre et le rapport molaire $H^+/Ce^{IV}$ est égal à 0,64.

On maintient le milieu réactionnel sous agitation et au reflux pendant 4 heures.

On effectue la filtration sur verre fritté (porosité n° 3) en couche mince (< 5 mm) et sous pression réduite (160 mm de mercure) (21333,15 Pa) et l'on tasse au maximum le gâteau pour assurer un essorage poussé.

On recueille 157 g d'un précipité jaune d'un composé de cérium IV répondant à la formule (IIa) contenant 72,5 % de $CeO_2$, un rapport molaire $NO_3^-/Ce^{IV}$ d'environ 0,45.

On additionne 27,6 g du composé ainsi préparé dans de l'eau distillée mise en quantité suffisante pour obtenir un volume de 250 cm$^3$. On obtient un sol ayant une concentration en cérium IV exprimée en $CeO_2$ de 80 g/l.

L'examen par diffusion quasi-élastique de la lumière montre la présence de colloïdes de diamètre hydrodynamique moyen de l'ordre de (600 Å) 60 nm.

b - Préparation de l'oxyde cérique grande surface spécifique et porosité bipopulée

Dans 250 cm$^3$ du sol précédemment préparé, on additionne sous agitation et à température ambiante 7,3 cm$^3$ d'une solution d'ammoniaque 11N jusqu'à pH = 9,5 à raison de 45 cm$^3$/heure.

On maintient la masse réactionnelle à pH = 9,5 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures à 300°C.

L'analyse porosimétrique BET de l'oxyde cérique obtenu met en évidence :
- une surface spécifique de 175 m$^2$/g
- un volume poreux d'environ 0,24 cm$^3$/g
- une double répartition de pores :
  présence de micropores de diamètre moyen d'environ (15 Å) 1,5 nm.
  présence de mésopores de diamètre moyen d'environ (100 Å) 10 nm.

EXEMPLE 10

a - Préparation d'un sol de composé de cérium IV répondant à la formule (IIb)

On reprend l'exemple 9 à la différence près que l'on introduit en 3 heures, 558 cm$^3$ de ladite solution de nitrate cérique dans 1425 cm$^3$ d'eau dont la température a été au préalable portée à 100°C.

Dans le milieu d'hydrolyse, la concentration en cérium IV exprimée en $CeO_2$ est égale à 60 g/litre et le rapport molaire $H^+/Ce^{IV}$ est égal à 0,64.

On maintient le milieu réactionnel sous agitation et au reflux pendant 3 heures.

On effectue la filtration sur verre fritté (porosité n° 3) en couche mince (< 5 mm) et sous pression réduite (160 mm de mercure) (21333,15 Pa) et l'on tasse au maximum le gâteau pour assurer un essorage poussé.

On sèche le produit obtenu à 20°C pendant 15 h.

On recueille 14,6 g d'un précipité jaune d'un composé de cérium IV répondant à la formule (IIb) contenant 76,6 %, un rapport molaire $NO_3^-/Ce^{IV}$ d'environ 0,37.

On additionne 26,1 g du composé ainsi préparé dans de l'eau distillée mise en quantité suffisante pour obtenir un volume de 250 cm$^3$. On obtient un sol ayant une concentration en cérium IV exprimée en $CeO_2$ de 80 g/l.

L'examen par diffusion quasi-élastique de la lumière montre la présence de colloïdes de diamètre hydrodynamique moyen de l'ordre de (200 Å) 20 nm.

b - Préparation de l'oxyde cérique grande surface spécifique et porosité homogène

Dans 250 cm$^3$ du sol précédemment préparé, on additionne sous agitation et à température ambiante 7,3 cm$^3$ d'une solution d'ammoniaque 11N jusqu'à pH = 9,5 à raison de 45 cm$^3$/heure.

On maintient la masse réactionnelle à pH = 9,5 durant 5 minutes, puis on effectue la séparation solide-liquide par filtration.

On effectue ensuite un lavage du précipité récupéré dans 250 cm$^3$ d'eau distillée durant 15 minutes.

Après filtration, le solide recueilli est séché dans une étuve à 100°C durant 24 heures.

On le calcine ensuite dans un four à moufles durant 6 heures à 300°C.

L'analyse porosimétrique BET de l'oxyde cérique obtenu met en évidence :
- une surface spécifique de 165 m$^2$/g
- un volume poreux d'environ 0,23 cm$^3$/g
- un diamètre moyen des pores de l'ordre de (75 Å) 7,5 nm
- une répartition homogène en taille des pores : les écarts-types déterminés par les rapports

$$\frac{d_{84} \cdot v_P}{d_{50} \cdot v_P} \quad et \quad \frac{d_{50} \cdot v_P}{d_{16} \cdot v_P}$$

sont respectivement égaux à 1,20 et 1,35.

## Revendications

**1.** Oxyde cérique ayant une surface spécifique d'au moins 100 m$^2$/g après calcination entre 350 et 450°C pendant au moins deux heures caractérisé par le fait qu'il présente un volume poreux d'au moins 0,15 cm$^3$/g et des pores de diamètre moyen supérieur à 5 nm (50 Å), ledit diamètre moyen étant défini comme étant un diamètre tel que tous les pores inférieurs à ce diamètre constituent 50 % du volume poreux total.

**2.** Oxyde cerique selon la revendication 1 caractérisé par le fait qu'il présente un volume poreux variant entre 0,15 et 0,3 cm$^3$/g.

**3.** Oxyde cérique selon l'une des revendications 1 à 2 caractérisé par le fait qu'il présente une pureté supérieure à 99 %.

**4.** Oxyde cérique selon la revendication 1 caractérisé par le fait qu'il présente un volume poreux supérieur à 0,15 cm$^3$/g, un diamètre moyen de ses pores compris entre 5 et 20 nm(50 et 200 Å) et une répartition de ses pores monomodale.

**5.** Oxyde cérique selon la revendication 4 caractérisé par le fait qu'il présente une surface spécifique de 150 à 100 m$^2$/g après calcination à une température comprise entre 400 et 450°C.

**6.** Oxyde cérique selon la revendication 4 caractérisé par le fait que le diamètre moyen de ses pores varie entre 8 et 15 nm(80 et 150 Å).

**7.** Oxyde cérique selon la revendication 4 caractérisé par le fait qu'il présente une répartition de ses pores homogène et resserrée ; les écarts-types $e_1$ et $e_2$ étant compris dans un intervalle allant de 1,0 à 2,0.

**8.** Oxyde cérique selon la revendication 1 caractérisé par le fait qu'il présente un volume poreux supérieur à 0,15 cm$^3$/g, une répartition de pores bipopulée, le diamètre moyen des micropores étant compris entre 1 et 5 nm (10 et 50 Å) et le diamètre moyen des mésopores variant entre 5 et 20 nm (50 et 200 Å).

**9.** Oxyde cérique selon la revendication 8 caractérisé par le fait qu'il présente une surface spécifique de 180 à 150 m$^2$/g après calcination à une température comprise entre 400 et 450°C.

**10.** Procédé de préparation de l'oxyde cérique à grande surface spécifique et à porosité controlée décrit dans l'une des revendications 1 à 9 caractérisé par le fait qu'il consiste à déstabiliser par addition d'une base, une dispersion aqueuse colloïdale d'un composé de cérium IV, jusqu'à l'obtention d'un pH supérieur à 7, à séparer le précipité obtenu, puis à le soumettre à un traitement thermique.

**11.** Procédé selon la revendication 10 caractérisé par le fait que la dispersion colloïdale aqueuse du composé de cérium IV mise en oeuvre répond à la formule générale (I) :

$$Ce \, (M)_z \, (OH)_x \, (NO_3)_y \, , \, nH_2O$$

dans laquelle :
- M représente un métal alcalin ou un radical ammonium quaternaire
- z est compris entre 0 et 0,2
- y est compris entre 0 et 0,7
- x est tel que x = 4 + z - y
- n est compris entre 0 et environ 20

**12.** Procédé selon la revendication 11 caractérisé par le fait que la concentration du composé de cérium IV dans ladite dispersion colloïdale varie entre 0,1 et 2,0 moles/litre.

13. Procédé selon la revendication 12 caractérisé par le fait que ladite concentration est comprise entre 0,5 et 1 mole/litre.

14. Procédé selon la revendication 11 caractérisé par le fait que le taux de cérium sous forme colloïdale dans ladite dispersion est compris entre 99 et 100 %.

15. Procédé selon la revendication 11 caractérisé par le fait que les colloïdes présentent un diamètre hydrodynamique moyen variant entre 10 et 200 nm (100 et 2000 Å).

16. Procédé selon la revendication 10 caractérisé par le fait que la normalité de la solution basique varie entre 0,1 et 11 N.

17. Procédé selon la revendication 16 caractérisé par le fait que ladite normalité est comprise entre 5 et 10 N.

18. Procédé selon la revendication 10 caractérisé par le fait que la quantité de base additionnée est telle que le pH final de la dispersion traitée soit supérieur à 7.

19. Procédé selon la revendication 18 caractérisé par le fait que la quantité de base additionnée est telle que le pH final de la dispersion traitée soit supérieur ou égal à 9, et inférieur ou égal à 10.

20. Procédé selon la revendication 10 caractérisé par le fait que l'on additionne la base dans la dispersion colloïdale aqueuse du composé de cérium IV ou inversement : l'addition pouvant être effectuée en une seule fois, graduellement ou en continu.

21. Procédé selon la revendication 10 caractérisé par le fait que le débit d'addition de la base dans la dispersion colloïdale aqueuse du composé de cérium IV varie entre 0,1 et 5 moles d'OH⁻ par mole de cérium IV et par heure.

22. Procédé selon la revendication 10 caractérisé par le fait que la température du mélange est choisie entre la température ambiante (10-25°C) et 60°C.

23. Procédé selon la revendication 10 caractérisé par le fait que l'on maintient encore le milieu réactionnel sous agitation pendant une durée pouvant varier entre 1 minute et 24 heures.

24. Procédé selon la revendication 10 caractérisé par le fait que l'on effectue la séparation du précipité selon les techniques classiques de séparation solide-liquide : filtration, décantation, centrifugation ou essorage.

25. Procédé selon la revendication 10 caractérisé par le fait que l'on effectue un ou plusieurs lavages du précipité à l'aide d'eau ou d'un solvant organique.

26. Procédé selon la revendication 10 caractérisé par le fait que l'on effectue l'étape de séchage à l'air ou sous pression réduite de l'ordre de 1 à 100 mm de mercure, à une température comprise entre la température ambiante (10-25°C) et 100°C pendant une durée comprise entre 2 et 48 heures.

27. Procédé selon la revendication 10 caractérisé par le fait que l'on effectue l'étape de calcination à une température comprise entre 300 et 800°C pendant une durée allant de 30 minutes à 10 heures.

28. Procédé selon la revendication 27 caractérisé par le fait que la température de calcination est comprise entre 350 et 450°C.

29. Procédé selon la revendication 28 caractérisé par le fait que la durée de calcination est comprise entre 4 et 8 heures.

30. Procédé de préparation de l'oxyde cérique décrit dans l'une des revendications 4 à 7 caractérisé par le fait qu'il consiste à déstabiliser par addition d'une base, une dispersion aqueuse colloïdale d'un composé de cérium IV, à séparer le précipité obtenu et à le calciner : ladite dispersion étant préparée par mise en suspension dans l'eau d'un composé de cérium IV répondant à la formule (IIa) :

Ce $(OH)_x$ $(NO_3)_y$ , n $H_2O$    (IIa)

dans laquelle :
- x est tel que x = 4 - y
- y est compris entre 0,35 et 0,7
- n est supérieur ou égal à 0 et inférieur ou égal à environ 20

et obtenu selon un procédé qui consiste dans une première étape, à hydrolyser une solution aqueuse d'un nitrate de cérium IV en milieu acide : la solution de nitrate de cérium IV est additionnée en une seule fois, graduellement ou en continu dans l'eau contenant éventuellement un acide portée à la température réactionnelle ou inversement et le rapport molaire $[H^+]/[Ce^{IV} \text{ éq.}]$ est supérieur ou égal à 0 et inférieur ou égal à 3 ; dans une deuxième étape à séparer le précipité obtenu et éventuellement dans une troisième étape à le traiter thermiquement.

31. Procédé selon la revendication 30 caractérisé par le fait que dans l'étape d'hydrolyse, le mélange de la solution de nitrate de cérium IV et du milieu d'hydrolyse est effectué simultanément et en continu et le mélange est chauffé en continu à la température réactionnelle et le rapport molaire $[H^+]/[Ce^{IV}$ éq.] est supérieur ou égal à 0 et inférieur ou égal à 3.

32. Procédé selon l'une des revendications 30 et 31 caractérisé par le fait que le rapport molaire $[H^+]/[Ce^{IV}$ éq.] est compris entre 0 et 2,0.

33. Procédé selon la revendication 30 caractérisé par le fait que dans l'étape d'hydrolyse, la solution de nitrate de cérium IV et le milieu d'hydrolyse sont d'abord mélangés sous agitation puis portés à la température réactionnelle et le rapport molaire $[H^+]/[Ce^{IV}$ éq.] est supérieur à 0,75 et inférieur ou égal à 3 quelle que soit la concentration finale équivalente en cérium IV ou le rapport molaire $[H^+]/[Ce^{IV}$ éq.] est supérieur ou égal à 0 et inférieur ou égal à 0,75 lorsque la concentration finale équivalente en cérium IV est choisie supérieure ou égale à 0,4 mole/litre.

34. Procédé de préparation de l'oxyde cérique décrit dans l'une des revendications 8 et 9 caractérisé par le fait qu'il consiste à déstabiliser par addition d'une base, une dispersion aqueuse colloïdale d'un composé de cérium IV, à séparer le précipité obtenu et à le calciner : ladite dispersion étant préparée par mise en suspension dans l'eau d'un composé de cérium IV répondant à la formule (IIa) :

Ce $(OH)_x$ $(NO_3)_y$, $nH_2O$        (IIa)

dans laquelle :
- x est tel que x = 4 - y
- y est compris entre 0,35 et 0,7
- n est supérieur ou égal à 0 et inférieur ou égal à environ 20

et obtenu selon un procédé qui consiste dans une première étape à hydrolyser une solution aqueuse d'un nitrate de cérium IV en milieu acide : la solution de nitrate de cérium IV et le milieu d'hydrolyse sont d'abord mélangés sous agitation puis portés à la température réactionnelle et le rapport molaire $[H^+]/[Ce^{IV}$ éq.] est supérieur ou égal à 0 et inférieur ou égal à 0,75 et la concentration finale équivalente en cérium IV est inférieure à 0,4 mole/litre ; dans une deuxième étape à séparer le précipité obtenu et éventuellement dans une troisième étape à le traiter thermiquement.

35. Procédé selon la revendication 34 caractérisé par le fait que la proportion entre la solution aqueuse de nitrate de cérium IV et le milieu d'hydrolyse est telle que la concentration finale équivalente en cérium IV est comprise entre 0,2 et 0,4 mole/litre.

36. Procédé selon l'une des revendications 30 à 35 caractérisé par le fait que la solution aqueuse de nitrate de cérium IV est une solution aqueuse de nitrate cérique.

37. Procédé selon l'une des revendications 30 à 36 caractérisé par le fait que l'acidité est apportée par de l'acide nitrique.

38. Procédé selon l'une des revendications 30 à 36 caractérisé par le fait que la température d'hydrolyse pour former le composé de formule (IIa) est comprise entre 70 et 120°C.

39. Procédé selon l'une des revendications 36 à 37 caractérisé par le fait que le précipité obtenu après hydrolyse est séparé et séché à une température variant entre 15°C et 100°C.

40. Procédé selon la revendication 39 caractérisé par le fait que ladite température est choisie entre la température ambiante (10-25°C) et 50°C.

**Claims**

1. Ceric oxide which has a specific surface of at least 100 $m^2$/g after calcination between 350 and 450°C for at least two hours, characterised in that it has a pore volume of at least 0.15 $cm^3$/g and pores of a mean diameter greater than 5 nm (50 Å), the said mean diameter being defined as being a diameter such that all the pores smaller than this diameter constitute 50% of the total pore volume.

2. Ceric oxide according to Claim 1, characterised in that it has a pore volume varying between 0.15 and 0.3 $cm^3$/g.

3. Ceric oxide according to either of Claims 1 and 2, characterised in that it has a purity higher than 99%.

4. Ceric oxide according to Claim 1, characterised in that it has a pore volume higher than 0.15 $cm^3$/g, a mean diameter of its pores of between 5 and 20 nm (50 and 200 Å) and a monomodal distribution of its pores.

5. Ceric oxide according to Claim 4, characterised in that it has a specific surface of 150 to 100 $m^2$/g after calcination at a temperature of between 400 and 450°C.

6. Ceric oxide according to Claim 4, characterised in that the mean diameter of its pores varies between 8 and 15 nm (80 and 150 Å).

7. Ceric oxide according to Claim 4, characterised in that it has a homogeneous and narrow distribution of its pores, the standard deviations $e_1$ and $e_2$ being included in a range from 1.0 to 2.0.

8. Ceric oxide according to Claim 1, characterised in that it has a pore volume higher than 0.15 $cm^3$/g, a twin-population pore distribution, the mean diameter of the micropores being between 1 and 5 nm (10 and 50 Å) and the mean diameter of the mesopores varying between 5 and 20 nm (50 and 200 Å).

9. Ceric oxide according to Claim 8, characterised in that it has a specific surface of 180 to 150 $m^2$/g after calcination at a temperature of between 400 and 450°C.

10. Process for the preparation of the ceric oxide of high specific surface and controlled porosity described in one of Claims 1 to 9, characterised in that it consists in destabilising, by adding a base, a colloidal aqueous dispersion of a cerium(IV) compound until a pH higher than 7 is obtained, in separating off the precipitate obtained and then in subjecting it to a thermal treatment.

11. Process according to Claim 10, characterised in that the aqueous colloidal dispersion of the cerium(IV) compound used corresponds to the general formula (I);

$$Ce(M)_z(OH)_x(NO_3)_y.nH_2O$$

in which:
- M denotes an alkali metal or a quaternary ammonium radical
- z is between 0 and 0.2
- y is between 0 and 0.7
- x is such that x = 4 + z - y
- n is between 0 and approximately 20

12. Process according to Claim 11, characterised in that the concentration of the cerium(IV) compound in the said colloidal dispersion varies between 0.1 and 2.0 moles/litre.

13. Process according to Claim 12, characterised in that the said concentration is between 0.5 and 1 mole/litre.

14. Process according to Claim 11, characterised in that the proportion of cerium in colloidal form in the said dispersion is between 99 and 100%.

15. Process according to Claim 11, characterised in that the colloids have a mean hydrodynamic diameter varying between 10 and 200 nm (100 and 2000 Å).

16. Process according to Claim 10, characterised in that the normality of the basic solution varies between 0.1 and 11 N.

17. Process according to Claim 16, characterised in that the said normality is between 5 and 10 N.

18. Process according to Claim 10, characterised in that the quantity of added base is such that the final pH of the treated dispersion is higher than 7.

19. Process according to Claim 18, characterised in that the quantity of added base is such that the final pH of the treated dispersion is higher than or equal to 9 and lower than or equal to 10.

20. Process according to Claim 10, characterised in that the base is added to the aqueous colloidal dispersion of the cerium(IV) compound or vice versa, it being possible for the addition to be performed once, gradually or continuously.

21. Process according to Claim 10, characterised in that the rate of addition of the base to the aqueous colloidal dispersion of the cerium(IV) compound varies between 0.1 and 5 moles of $OH^-$ per mole of cerium(IV) and per hour.

22. Process according to Claim 10, characterised in that the temperature of the mixture is chosen between room temperature (10-25°C) and 60°C.

23. Process according to Claim 10, characterised in that the reaction mixture is still kept stirred for a period which may vary between 1 minute and 24 hours.

24. Process according to Claim 10, characterised in that the separation of the precipitate is performed using conventional solid-liquid separation techniques: filtration, settling, centrifuging or draining.

25. Process according to Claim 10, characterised in that one or more washings of the precipitate are performed with the aid of water or of an organic solvent.

26. Process according to Claim 10, characterised in that the stage of drying in air or at a reduced pressure of the order of 1 to 100 mm of mercury is performed at a temperature between room temperature (10-25°C) and 100°C for a period of between 2 and 48 hours.

27. Process according to Claim 10, characterised in that the calcination stage is performed at a temperature of between 300 and 800°C for a period ranging from 30 minutes to 10 hours.

28. Process according to Claim 27, characterised in that the calcination temperature is between 350 and 450°C.

29. Process according to Claim 28, characterised in that the calcination period is between 4 and 8 hours.

30. Process for the preparation of the ceric oxide described in one of Claims 4 to 7, characterised in that it consists in destabilising, by adding a base, a colloidal aqueous dispersion of a cerium(IV) compound, in separating off the precipitate obtained and in calcining it, the said dispersion being prepared by suspending in water a cerium(IV) compound corresponding to the formula (IIa):

$$Ce(OH)_x(NO_3)_y.nH_2O \qquad (IIa)$$

in which:
- x is such that x = 4 - y
- y is between 0.35 and 0.7
- n is greater than or equal to 0 and smaller than or equal to approximately 20

and obtained according to a process which consists, in a first stage, in hydrolysing an aqueous solution of a cerium(IV) nitrate in an acidic medium: the cerium(IV) nitrate solution is added once, gradually or continuously to water optionally containing an acid and heated to the reaction temperature or vice versa and the molar ratio $[H^+]/[Ce^{IV}$ eq.$]$ is higher than or equal to 0 and lower than or equal to 3; in a second stage, in separating off the precipitate obtained and optionally in treating it thermally in a third stage.

31. Process according to Claim 30, characterised in that, in the hydrolysis stage, the mixing of the cerium(IV) nitrate solution and of the hydrolysis medium is performed simultaneously and continuously and the mixture is heated continuously to the reaction temperature and the molar ratio $[H^+]/[Ce^{IV}$ eq.$]$ is higher than or equal to 0 and lower than or equal to 3.

32. Process according to either of Claims 30 and 31, characterised in that the molar ratio $[H^+]/[Ce^{IV}$ eq.$]$ is between 0 and 2.0.

33. Process according to Claim 30, characterised in that, in the hydrolysis stage, the cerium(IV) nitrate solution and the hydrolysis medium are first of all mixed with stirring and then heated to the reaction temperature and the molar ratio $[H^+]/[Ce^{IV}$ eq.$]$ is higher than or equal to 0.75 and lower than or equal to 3 whatever the equivalent final concentration of cerium(IV), or the molar ratio $[H^+]/[Ce^{IV}$ eq.$]$ is higher than or equal to 0 and lower than or equal to 0.75 when the equivalent final concentration of cerium(IV) is chosen to be higher than or equal to 0.4 mole/litre.

34. Process for the preparation of the ceric oxide described in either of Claims 8 and 9, characterised in that it consists in destabilising, by adding a base, a colloidal aqueous dispersion of a cerium(IV) compound, in separating off the precipitate obtained and in calcining it, the said dispersion being prepared by suspending in water a cerium(IV) compound corresponding to the formula (IIa):

$$Ce(OH)_x(NO_3)_y.nH_2O \qquad (IIa)$$

in which:
- x is such that x = 4 - y
- y is between 0.35 and 0.7
- n is greater than or equal to 0 and smaller than or equal to approximately 20

and obtained by a process which consists, in a first stage, in hydrolysing an aqueous solution of a cerium(IV) nitrate in an acidic medium: the cerium(IV) nitrate solution and the hydrolysis medium are first of all mixed with stirring and then heated to the reaction temperature and the molar ratio $[H^+]/[Ce^{IV}$ eq.$]$ is higher than or equal to 0 and lower than or equal to 0.75 and the equivalent final concentration of cerium(IV) is lower than 0.4 mole/litre; in a second stage, in separating off the precipitate obtained and optionally in treating it thermally in a third stage.

35. Process according to Claim 34, characterised in that the proportion of the aqueous solution of cerium(IV) nitrate to the hydrolysis medium is such that the equivalent final concentration of cerium(IV) is between 0.2 and 0.4 mole/litre.

36. Process according to one of Claims 30 to 35, characterised in that the aqueous solution of cerium(IV) nitrate is an aqueous solution of ceric nitrate.

37. Process according to one of Claims 30 to 36, characterised in that the acidity is brought about by nitric acid.

38. Process according to one of Claims 30 to 36, characterised in that the temperature of hydrolysis to form the compound of formula (IIa) is between 70 and 120°C.

39. Process according to either of Claims 36 to 37, characterised in that the precipitate obtained after hydrolysis is separated off and dried at a temperature varying between 15°C and 100°C.

40. Process according to Claim 39, characterised in that the said temperature is chosen between room temperature (10-25°C) and 50°C.

**Patentansprüche**

1. Ceroxid mit einer spezifischen Oberfläche von mindestens 100 $m^2$/g nach Calcinierung bei 350 bis 450°C während mindestens zwei Stunden, dadurch gekennzeichnet, daß es ein Porenvolumen von mindestens 0,15 $cm^3$/g und Poren mit einem durchschnittlichen Durchmesser über 5 nm (50 Å) aufweist, wobei dieser durchschnittliche Durchmesser als ein Durchmesser definiert wird, bei dem alle Poren, die kleiner als dieser Durchmesser sind, 50 % des gesamten Porenvolumens darstellen.

2. Ceroxid nach Anspruch 1, dadurch gekennzeichnet, daß es ein Porenvolumen von 0,15 bis 0,3 $cm^3$/g aufweist.

3. Ceroxid nach einem der Ansprüche 1 und 2, dadurch gekennzeichnet, daß es eine Reinheit über 99 % aufweist.

4. Ceroxid nach Anspruch 1, dadurch gekennzeichnet, daß es ein Porenvolumen über 0,15 $cm^3$/g, einen durchschnittlichen Porendurchmesser zwischen 5 und 20 nm (50 und 200 Å) und eine monomodale Verteilung der Poren aufweist.

5. Ceroxid nach Anspruch 4, dadurch gekennzeichnet, daß es nach Calcinierung bei einer Temperatur zwischen 400 und 450°C eine spezifische Oberfläche von 150 bis 100 $m^2$/g aufweist.

6. Ceroxid nach Anspruch 4, dadurch gekennzeichnet, daß der durchschnittliche Porendurchmesser zwischen 8 und 15 nm (80 und 150 Å) schwankt.

7. Ceroxid nach Anspruch 4, dadurch gekennzeichnet, daß es eine homogene und enge Verteilung der Poren aufweist, wobei die Normabstände $e_1$ und $e_2$ in einem Bereich von 1,0 bis 2,0 liegen.

8. Ceroxid nach Anspruch 1, dadurch gekennzeichnet, daß es ein Porenvolumen über 0,15 $cm^3$/g und eine zweifache Verteilung der Poren aufweist, wobei der durchschnittliche Durchmesser der Microporen zwischen 1 und 5 nm (10 und 50 Å) und der durchschnittliche Durchmesser der Mesoporen zwischen 5 und 20 nm (50 und 200 Å) liegen.

9. Ceroxid nach Anspruch 8, dadurch gekennzeichnet, daß es nach Calcinierung bei einer Temperatur zwischen 400 und 450°C eine spezifische Oberfläche von 180 bis 150 $m^2$/g aufweist.

10. Verfahren zur Herstellung von Ceroxid mit großer spezifischen Oberfläche und bestimmter Porosität, wie es in den Ansprüchen 1 bis 9 definiert wird, dadurch gekennzeichnet, daß man eine wäßrige kolloidale Dispersion einer Cer(IV)verbindung durch Zugabe einer Base bis zu einem pH-Wert höher als 7 destabilisiert, den erhaltenen Niederschlag abtrennt und ihn einer thermischen Behandlung unterwirft.

11. Verfahren nach Anspruch 10, dadurch gekennzeichnet, daß die wäßrige kolloidale Dispersion der Cer(IV)verbindung der allgemeinen Formel (I)

Ce (M)$_z$ (OH)$_x$(NO$_3$)$_y$,nH$_2$O

entspricht, in der
   M    ein Alkalimetall oder einen quaternären Ammoniumrest bedeutet,
   z    zwischen 0 und 0,2 und

y       zwischen 0 und 0,7 liegen,

x       so ist wie x = 4 + z - y und

n       zwischen 0 und ungefähr 20 steht.

12. Verfahren nach Anspruch 11, dadurch gekennzeichnet, daß sich die Konzentration der Cer-(IV)verbindung in der kolloidalen Dispersion zwischen 0,1 und 2,0 Mol/Liter bewegt.

13. Verfahren nach Anspruch 12, dadurch gekennzeichnet, daß die Konzentration zwischen 0,5 und 1 Mol/ Liter liegt.

14. Verfahren nach Anspruch 11, dadurch gekennzeichnet, daß der Gehalt von Cer in kolloidaler Form in der Dispersion zwischen 99 und 100% beträgt.

15. Verfahren nach Anspruch 11, dadurch gekennzeichnet, daß die Kolloide einen durchschnittlichen hydrodynamischen Durchmesser zwischen 10 und 200 nm (100 und 2000 Å) aufweisen.

16. Verfahren nach Anspruch 10, dadurch gekennzeichnet, daß die Normalität der basischen Lösung zwischen 0,1 und 11 N liegt.

17. Verfahren nach Anspruch 16, dadurch gekennzeichnet, daß die Normalität der basischen Lösung zwischen 5 und 10 N liegt.

18. Verfahren nach Anspruch 10, dadurch gekennzeichnet, daß die zugegebene Menge der Base so ist, daß der End-pH-Wert der behandelten Dispersion höher als 7 ist.

19. Verfahren nach Anspruch 18, dadurch gekennzeichnet, daß die zugegebene Menge der Base so ist, daß der End-pH-Wert der behandelten Dispersion höher oder gleich 9 und niedriger oder gleich 10 ist.

20. Verfahren nach Anspruch 10, dadurch gekennzeichnet, daß man die Base der wäßrigen kolloidalen Dispersion der Cer(IV)verbindung zugibt oder umgekehrt, wobei die Zugabe auf einmal, stufenweise oder kontinuierlich durchgeführt werden kann.

21. Verfahren nach Anspruch 10, dadurch gekennzeichnet, daß die Menge der zugesetzten Base in der wäßrigen kolloidalen Dispersion der Cer-(IV)verbindung zwischen 0,1 und 5 Mol OH⁻ pro Mol Cer(IV) pro Stunde schwankt.

22. Verfahren nach Anspruch 10, dadurch gekennzeichnet, daß die Temperatur der Mischung zwischen Raumtemperatur (10-25 ° C) und 60 ° C gewählt wird.

23. Verfahren nach Anspruch 10, dadurch gekennzeichnet, daß man das Reaktionsmedium während einer Zeitdauer, zwischen 1 Minute und 24 Stunden noch unter Rühren hält.

24. Verfahren nach Anspruch 10, dadurch gekennzeichnet, daß man die Trennung des Niederschlages mit den konventionellen Trennungsmethoden für fest-flüssige Medien : Filtration, Dekantieren, Zentrifugieren oder Schleudern durchführt.

25. Verfahren nach Anspruch 10, dadurch gekennzeichnet, daß man den Niederschlag ein- oder mehrmals mit Wasser oder einem organischen Lösungsmittel wäscht.

26. Verfahren nach Anspruch 10, dadurch gekennzeichnet, daß man die Trocknungsstufe an der Luft oder unter vermindertem Druck in der Größenordnung von 1 bis 100 mm Hg, bei einer Temperatur zwischen der Raumtemperatur (10-25 ° C) und 100 ° C während einer Dauer zwischen 2 und 48 Stunden durchführt.

27. Verfahren nach Anspruch 10, dadurch gekennzeichnet, daß man die Calcinierung bei einer Temperatur zwischen 300 und 800 ° C während einer Dauer von 30 Minuten bis 10 Stunden durchführt.

28. Verfahren nach Anspruch 27, dadurch gekennzeichnet, daß die Temperatur der Calcinierung zwischen 350 und 450 ° C liegt.

29. Verfahren nach Anspruch 28, dadurch gekennzeichnet, daß die Dauer der Calcinierung zwischen 4 und 8 Stunden beträgt.

30. Verfahren zur Herstellung von Ceroxid nach einem der Ansprüche 4 bis 7, dadurch gekennzeichnet, daß man eine wäßrige kolloidale Dispersion einer Cer(IV)verbindung durch Zugabe einer Base destabilisiert und den erhaltenen Niederschlag abtrennt und calciniert, wobei die Dispersion durch Suspendierung einer Cer(IV)-verbindung der Formel (IIa)

$$Ce(OH)_x (NO_3)_y, nH_2O \quad (IIa)$$

in der

x       so ist wie x = 4 - y

y       zwischen 0,35 und 0,7 liegt

n       größer oder gleich 0 und kleiner oder gleich etwa 20 ist,

in Wasser hergestellt und nach einem Verfahren erhalten wird, welches darin besteht, daß man in einer ersten Stufe eine wäßrige Lösung von Cer(IV)nitrat in saurem Medium hydrolysiert, wobei die Cer(IV)nitratlösung auf einmal, stufenweise oder kontinuierlich auf Reaktionstemperatur gebrachtem Wasser, das gegebenenfalls eine Säure enthält, hinzugegeben wird oder umgekehrt und das Molverhältnis $(H^+)/(Ce^{IV}eq.)$ gleich oder größer 0 und kleiner oder gleich 3 ist, und in einer zweiten Stufe den erhaltenen Niederschlag abtrennt und gegebenenfalls in einer dritten Stufe thermisch behandelt.

31. Verfahren nach Anspruch 30, dadurch gekennzeichnet, daß bei der Hydrolysenstufe die Mischung der Cer(IV)nitratlösung und des Hydrolysenmediums gleichzeitig und kontinuierlich durchgeführt und das Gemisch kontinuierlich bis zur Reaktionstemperatur erwärmt wird, wobei das Molverhältnis $(H^+)/(Ce^{IV}eq.)$ gleich oder größer 0 und kleiner oder gleich 3 ist.

32. Verfahren nach einem der Ansprüche 30 und 31, dadurch gekennzeichnet, daß das Molverhältnis $(H^+)/(Ce^{IV}eq.)$ zwischen 0 und 2,0 liegt.

33. Verfahren nach Anspruch 30, dadurch gekennzeichnet, daß in der Hydrolysenstufe die Cer(IV)nitratlösung und das Hydrolysenmedium zuerst unter Rühren vermischt und dann auf die Reaktionstemperatur gebracht werden, wobei das Molverhältnis $(H^+)/(Ce^{IV}eq.)$ unabhängig von der Cer(IV) äquivalenten Endkonzentration größer als 0,75 und kleiner oder gleich 3 ist oder das Molverhältnis $(H^+)/(Ce^{IV}eq.)$ größer oder gleich 0 und kleiner oder gleich 0,75 ist, wenn die zu Cer(IV) äquivalente Endkonzentration höher oder gleich 0,4 Mol/ Liter gewählt wird.

34. Verfahren zur Herstellung von Ceroxid nach einem der Ansprüche 8 und 9, dadurch gekennzeichnet, daß man eine wäßrige kolloidale Dispersion einer Cer(IV)verbindung durch Zugabe einer Base destabilisiert, den erhaltenen Niederschlag abtrennt und calciniert, wobei die genannte Dispersion durch Suspendierung einer Cer(IV)verbindung der Formel (IIa)

Ce (OH)$_x$ (NO$_3$)$_y$, nH$_2$O     (IIa)

in der

x     so ist wie x = 4 - y
y     zwischen 0,35 und 0,7 liegt
n     größer oder gleich 0 und kleiner oder gleich etwa 20 ist,

in Wasser hergestellt und nach einem Verfahren erhalten wird, welches darin besteht, daß man in einer ersten Stufe eine wäßrige Lösung einer Cer(IV)nitratlösung in saurem Medium hydrolysiert, wobei die Cer(IV)nitratlösung und das Hydolysenmedium zuerst unter Rühren vermischt und dann auf die Reaktionstemperatur gebracht werden und das Molverhältnis $(H^+)/(Ce^{IV}eq.)$ größer oder gleich 0 und kleiner oder gleich 0,75 und die zu Cer(IV) äquivalente Endkonzentration niedriger als 0,4 Mol/Liter ist, und in einer zweiten Stufe den erhaltenen Niederschlag abtrennt und gegebenenfalls in einer dritten Stufe thermisch behandelt.

35. Verfahren nach Anspruch 34, dadurch gekennzeichnet, daß das Verhältnis zwischen der wäßrigen Cer(IV)nitratlösung und dem Hydrolysenmedium so ist, daß die zu Cer(IV) äquivalente Endkonzentration zwischen 0,2 und 0,4 Mol/Liter liegt.

36. Verfahren nach einem der Ansprüche 30 bis 35, dadurch gekennzeichnet, daß die wäßrige Cer(IV)nitratlösung eine wäßrige Cer(IV)-nitratlösung ist.

37. Verfahren nach einem der Ansprüche 30 bis 36, dadurch gekennzeichnet, daß die Acidität mit Salpetersäure erzeugt wird.

38. Verfahren nach einem der Ansprüche 30 bis 36, dadurch gekennzeichnet, daß die Hydrolysentemperatur zur Herstellung der Verbindung der Formel (IIa) zwischen 70 und 120° C liegt.

39. Verfahren nach einem der Ansprüche 30 bis 37, dadurch gekennzeichnet, daß der nach der Hydrolyse erhaltene Niederschlag abgetrennt und bei einer Temperatur im Bereich von 15° bis 100° C getrocknet wird.

40. Verfahren nach Anspruch 39, dadurch gekennzeichnet, daß die Temperatur zwischen der Raumtemperatur (10-25° C) und 50° C liegt.